(19) Europäisches Patentamt
European Patent Office
Office européen des brevets

(11) EP 0 852 000 B1

(12) # EUROPÄISCHE PATENTSCHRIFT

(45) Veröffentlichungstag und Bekanntmachung des Hinweises auf die Patenterteilung:
**22.12.1999 Patentblatt 1999/51**

(21) Anmeldenummer: **96931774.2**

(22) Anmeldetag: **05.09.1996**

(51) Int Cl.⁶: **G01C 21/16**, G01C 21/20

(86) Internationale Anmeldenummer:
**PCT/EP96/03907**

(87) Internationale Veröffentlichungsnummer:
**WO 97/11334 (27.03.1997 Gazette 1997/14)**

(54) **NAVIGATIONSSYSTEM FÜR EIN FAHRZEUG, INSBESONDERE FÜR EIN LANDFAHRZEUG**

NAVIGATION SYSTEM FOR A VEHICLE, ESPECIALLY A LAND CRAFT

SYSTEME DE NAVIGATION POUR UN VEHICULE, NOTAMMENT POUR UN VEHICULE ROUTIER

(84) Benannte Vertragsstaaten:
**AT CH DE ES FI FR GB IT LI NL SE**

(30) Priorität: **19.09.1995 DE 19536601**

(43) Veröffentlichungstag der Anmeldung:
**08.07.1998 Patentblatt 1998/28**

(73) Patentinhaber: **LITEF GmbH**
**79115 Freiburg (DE)**

(72) Erfinder:
- **PICKHARD, Friedhelm**
  **D-33142 Düren (DE)**
- **WICK, Detlev**
  **D-69190 Walldorf (DE)**

(74) Vertreter: **Müller, Frithjof E., Dipl.-Ing.**
**Patentanwälte**
**MÜLLER & HOFFMANN,**
**Innere Wiener Strasse 17**
**81667 München (DE)**

(56) Entgegenhaltungen:

| | |
|---|---|
| **EP-A- 0 161 668** | **EP-A- 0 496 508** |
| **DE-A- 3 229 819** | **US-A- 5 166 882** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 852 000 B1

## Beschreibung

Die Erfindung betrifft Navigationssysteme für ein Fahrzeug, insbesondere für ein Landfahrzeug, mit den im Oberbegriff des Anspruchs 1 genannten Merkmalen.

Stand der Technik

Es ist bekannt, Fahrzeuge mit Navigationssystemen auszustatten, die eine Bestimmung der Position und der Richtung des Fahrzeugs gestatten (siehe beispielsweise die EP-A-0 161 668). Die Fahrzeuge weisen hierzu sogenannte Inertialsysteme auf, die mit fahrzeugfesten Sensoren ausgestattet sind. Als Sensoren werden üblicherweise den Achsen eines karthesischen Koordinatensystems zugeordnete Beschleunigungsmesser und Kreisel eingesetzt. Die Achsen des Koordinatensystems sind hierbei so gelegt, daß eine x- und eine y-Achse in der horizontalen Fahrzeugebene liegen und eine z-Achse mit der Fahrzeughochachse zusammenfällt. Typische Anwendungsfälle derartiger Inertialsysteme sind Koppelnavigationssysteme, Inertialnavigationssysteme und Kurs-/Lagereferenzsysteme. Bei einer allgemein angewandten Kurs/Lagerechnung werden mittels der den einzelnen Achsen des Koordinatensystems zugeordneten Kreiseln die Kurs-/Lageinformationen des Fahrzeugs, beispielsweise als Richtungskosinusmatrix, ermittelt. Durch Verknüpfung der Richtungskosinusmatrix mit einer gemessenen fahrzeugfesten Geschwindigkeit kann eine Koppelnavigation in bekannter Weise berechnet werden. Die fahrzeugfeste Geschwindigkeitsmessung dient hierbei auch als Stützmessung für die Lagebestimmung des Fahrzeugs. Die derart ermittelten Kurs und Position des Fahrzeugs werden mit Stützinformationen verknüpft, die nur eingeschränkt verfügbar sein können. Hierzu ist es bekannt, die Fahrzeuge mit Empfängern von Satellitennavigationssystemen - beispielsweise GPS - auszustatten, die Geschwindigkeits- und/oder Positionssignale zur Verfügung stellen. Alternativ können zur Stützung auch Positionskoordinaten aus Karten übernommen werden, wobei es für die vorliegende Anwendung unerheblich ist, ob diese Positionsinformationen aus einer digitalen Karte oder einer Papierkarte entnommen werden. Mittels dieser Stützinformationen können Positions- und Geschwindigkeitsmessungen mit den auf bordautonomen Messungen basierenden Signalen verglichen werden und als Differenzsignale einem Kalman-Filter als Beobachtung zugeführt werden, das ein linearisiertes Modell der Algorithmen für die Berechnung der Navigaticnsdaten des Navigationssystems beinhaltet. Mittels des KalmanFilrers werden Korrekturen für die Navigationsparameter und für die Kalibration der Sensoren des Navigationssystems geschätzt.

Hierbei ist nachteilig, daß durch die Nichtlinearität der Kurs-Lagerechnung des Navigationssystems einerseits und der linearen Approximation in den Modellgleichungen des Kalman-Filters andererseits fehlerhafte Schätzungen entstehen können, wenn das Filter außerhalb des zulässigen linearen Arbeitsbereiches betrieben wird.

Vorteile der Erfindung

Das erfindungsgemäße Navigationssystem mit den im Anspruch 1 genannten Merkmalen bietet demgegenüber den Vorteil, daß Fehler reduziert werden können, die ihre Ursache in dem nichtlinearen Charakter der Kurs-/Lagerechnung und der linearen Approximation des Fehlermodells im Kalman-Filter haben. Insbesondere bei Fahrzeugen mit einem eingeschränkten Lagewinkelbereich, beispielsweise bei Landfahrzeugen, sind Instrumentierungen des Navigationssystems möglich, die mit nur einem der Fahrzeughochachse zugeordneten Kreisel auskommen. Dadurch, daß dem Kalman-Filter wenigstens ein Teilfilter aus einem ersten Teilfilter für eine dynamische Horizontierung und einem zweiten Teilfilter, das als Positionsfilter zur Kurs-, Positions- und Sensorkalibration ausgebildet ist, zugeordnet ist, ist es vorteilhaft möglich, Filterverfahren durchzuführen, die Fehler reduzieren, die durch das Fehlen der horizontalen Fahrzeugebene zugeordneten Kreisel verursacht werden. Darüber hinaus ist eine Überwachung des Kalibrationszustandes, insbesondere der azimutalen Ausrichtung um eine durch nichtlineare Effekte verursachte Systemdekalibration, das heißt, eine Kurs-, Position- und Sensordekalibration möglich, wobei die Dekalibration erkannt und beseitigt werden kann. Sehr vorteilhaft kann hierbei weiterhin das lineare Fehlermodell als Basis des Kalman-Filters beibehalten werden, um den erhöhten numerischen und analytischen Aufwand für die Realisierung eines Kalman-Filters mit nichtlinearem Modell zu vermeiden.

Weitere vorteilhafte Ausgestaltungen der Erfindung ergeben sich aus den übrigen in den abhängigen Patentansprüchen genannten Merkmalen.

Zeichnungen

Die Erfindung wird nachfolgend in Ausführungsbeispielen anhand der zugehörigen Zeichnungen näher erläutert. Es zeigen:

Figur 1 eine Signalverarbeitungsstruktur eines Navigationssystems mit erfindungsgemäß reduzierter Sensorkonfiguration;

Figur 2 einen möglichen Zustand des Fahrzeuges;

Figur 3 eine Signalverarbeitungsstruktur des Navigationssystems nach einem weiteren Ausführungsbeispiel;

Figur 4 eine Fehlerschätzgleichung eines Positionsfilters;

Figur 5 ein Gesamtfehlermodell einer Horizontalnavigation;

Figur 6 eine Signalverarbeitungsstruktur des Navigationssystems nach einem weiteren Ausführungsbeispiel;

Figur 7 eine Fehlerschätzgleichung eines Positionsfilters gemäß Figur 6;

Beschreibung der Ausführungsbeispiele

Figur 1 zeigt eine Signalverarbeitungsstruktur eines allgemein mit 10 bezeichneten Navigationssystems eines nicht dargestellten Fahrzeugs. Bei den Ausführungsbeispielen wird davon ausgegangen, daß es sich um ein Landfahrzeug, beispielsweise ein Kraftfahrzeug handelt. Das Navigationssystem 10 besitzt in der Darstellung links dargestellte bordautonome fahrzeugfeste Meßeinrichtungen und in der Darstellung rechts dargestellte Meßeinrichtungen, die zeitlich eingeschränkt Meßsignale zur Verfügung stellen können. Als fahrzeugfeste Meßeinrichtungen ist ein Weggeber 12, ein einer Fahrzeughochachse, hier als z-Achse definiert, zugeordneter einachsiger Kreisel 14 und der horizontalen Fahrzeugebene jeweils in der x-Achse und y-Achse zugeordnete Beschleunigungsmesser 16 vorgesehen. Der Weggeber 12, der Kreisel 14 beziehungsweise die Beschleunigungsmesser 16 liefern von dem jeweiligen Fahrzeugzustand abhängige Signale, die in noch zu erläuternder Weise einer Koppelnavigation 18, einer Kurs-/Lagerechnung 20 und einer Geschwindigkeitsberechnung 22 zugeführt werden. Die Kurs-/Lagerechnung 20 liefert anhand der von dem z-Kreisel 14 gelieferten Signale eine Richtungskosinusmatrix $C_B^R$, wobei durch das Fehlen der x-Kreisel beziehungsweise y- Kreisel die diesen Achsen zuzuordnenden Drehraten von einem Kalman-Filter 24 in noch zu erläuternder Weise als Schätzwerte geliefert werden.

Die Beschleunigungsmesser 16 liefern die in der x-Richtung beziehungsweise y-Richtung auftretenden Beschleunigungssignale an die Geschwindigkeitsberechnung 22. Die Beschleunigungssignale werden zuvor über eine Coriolis-Korrektur 26 (in fahrzeugfesten Koordinaten) abgeglichen, um aufgrund einer von genau mit der x-Achse, y-Achse beziehungsweise z-Achse abweichenden Bewegungs- und damit Beschleunigungsrichtunc ausgehende Coriolis-Beschleunigungen berücksichtigen zu können. Bei dem Ausführungsbeispiel wird davon ausgegangen, daß aufgrund der Erddrehung induzierte Coriolis-Beschleunigungen vernachlässigbar sind. Die Coriolis-Korrekzur 26 verarbeitet hierbei die von dem Weggeber 12 beziehungsweise dem z-Kreisel 14 zur Verfügung gestellten Signale. Da durch das Nichtvorhandensein der x-Kreisel und y-Kreisel von diesen keine Signale bereitgestellt werden können, erfolgt die Berechnung der Coriolis-Korrektur des Fahrzeugs entsprechend der nachfolgend aufgefühten Matrix:

$$\Delta\underline{\theta}^B \times \underline{v}^B = \begin{pmatrix} -\Delta\theta_z \cancelto{0}{v_y} + \Delta\theta_y \cancelto{0}{v_z} \\ \Delta\theta_z v_x - \Delta\theta_x \cancelto{0}{v_z} \end{pmatrix}$$

Durch das Nichtvorhandensein der x-Kreisel und Y-Kreisel vereinfacht sich die Matrix zur Berechnung der Coriolis-Korrektur für die fahrzeugfeste x- und y-Achse in folgender Weise:

$$\begin{pmatrix} 0 \\ \Delta\theta_z \cdot v_{DT,x} \end{pmatrix}$$

Die Geschwindigkeitsberechnung 22 berechnet aus den derartig korrigierten Beschleunigungsmessersignalen die inerziale Geschwindigkeit $V_{INS}$ des Fahrzeugs. Diese inertiale Geschwindigkeit wird einem Differenzglied 28 zugeführt, dem gleichzeitig die vom Weggeber 12 gelieferte Weggebergeschwindigkeit zugeführt wird, und als Differenz zu der Weggebergeschwindigkeit dem Kalman-Filter 24 als Beobachtung zugeführt. Diese Beobachtung dient als Lagestützung der Navigationsberechnung.

Anstelle der hier erläuterten fahrzeugfesten Berechnung der inertialen Geschwindigkeit beziehungsweise der hieraus resultierenden Beobachtung kann gemäß einem nicht dargestellten Ausführungsbeispiel auch eine erdfeste Lagestützungsinformation ermittelt und bereitgestellt werden. Hierbei ist jedoch der Berechnungsaufwand durch den Abgleich mit erdfesten Koordinatenpunkten aufwendiger. Der Geschwindigkeitsberechnung 22 wird ferner die Richtungskosinusmatrix $C_B^R$ und ein vom Kalman-Filter 24 gelieferter Schätzwert der Geschwindigkeit zugeführt.

Der Kalman-Filter 24 hat bei der gezeigten Konfiguration der fahrzeugfesten Meßeinrichtungen unter anderem die Aufgabe, Schätzwerte der fehlenden Drehratenmessungen in der fahrzeugfesten Horizontalebene, das heißt in der x-Richtung und y-Richtung, zu liefern und diese quasikontinuierlich auf die Kurs/Lagerechnung 20 und die Geschwindigkeitsberechnung 22 mit geeigneter Bandbreite zurückzuführen. Die quasikontinuierliche Rückführung der Schätzwerte in den Berechnungsablauf des Navigationsalgorithmus stellt sicher, daß eine Verknüpfung mit der Dynamik der Schätzwerte der horizontalen Drehrate gewährleistet ist. Anstelle der quasikontinuierlichen Bereitstellung der dynamischen Schätzwerte der Drehraten kann ebenfalls ein hierzu äquivalenter Schätzwert, beispielsweise die Winkelinkremente der horizontalen Fahrzeugachsen erfolgen.

Der Koppelnavigation 18 werden die vom Weggeber 12 gelieferten Signale sowie die Richtungskosinusmatrix der Kurs-/Lagerechnung 20 zugeführt. Aus diesen zur Verfügung stehenden Signalen berechnet die Koppelnavigation 18 ein Positionssignal P und ein Geschwindigkeitssignal V. Das von der Koppelnavigation 18 gelieferte Positionsignal P und die von der Kurs/Lagerechnung 20 gelieferte Richtungskosinusmatrix $\mathbf{C_B^R}$ liefern die unkorrigierten Navigationsdaten, das heißt die Position, den Kurs und die Lage des Fahrzeugs, des gesamten Navigationsystems 10.

Zur Stützung von Kurs und Position werden Stützinformationen zum Beispiel über einen GPS-Empfänger 30 und/oder abgespeicherten Kartenpositionen 32 bereitgestellt. Der GPS-Empfänger 30 ist Bestandteil eines globalen Satellitennavigationssystems, mittels dem Positionssignale und Geschwindigkeitssignale bereitgestellt werden können. Mittels der Karte 32 läßt sich ebenfalls ein Positionssignal bestimmen. Verfahrensbedingt steht die Stützinformation nur zeitlich eingeschränkt zur Verfügung, da der GPS-Empfang gestört sein kann, beispielsweise durch Abschattung, oder Kartenpunkte als Stützung nur dann verwendbar sind, wenn diese im Gelände identifizierbar sind.

Die von dem GPS-Empfänger 30 beziehungsweise der Karte 32 gelieferten Positions- und Geschwindigkeitssignale werden über Differenzglieder 34 beziehungsweise 36 mit dem von der Koppelnavigation 18 gelieferten fahrzeugfesten Positions- und Geschwindigkeitssignalen verglichen und deren Differenz als Beobachtung dem Kalman-Filter 24 zugeführt.

Der Kalman-Filter 24 basiert auf einem linearisierten Modell der Algorithmen des Navigationssystems 10 und hat die Aufgabe, Korrekturen für die Ausgabegrößen des Navigationssystems 10 und für die Kalibration der Meßeinrichtungen des Navigationssystems 10 zu schätzen.

Für die Schätzung der fehlenden Drehratenmessungen in der fahrzeugfesten Horizontalebene ist eine Anpassung des Kalman-Filters 24, das heißt eine Festlegung beziehungsweise Ordnung der hierfür notwendigen Fehlerzustände möglich. Für eine bevorzugte Anwendung wird das Kalman-Filter 24 hierzu derart modifiziert, daß die Fehlerzustände Lagefehler (Richtungskosinusmatrix-Parameter), Winkelinkrementfehler und Geschwindigkeitsfehler, die jeweils der in der fahrzeugfesten horizontalen Fahrzeugebene liegenden x-Achse beziehungsweise y-Achse ihren Ursprung haben. Diese sechs Fehlerzustände bilden einen Teilfilter des Kalman-Filters 24, das die dynamische Horizontierung als Basis für die Schätzung der horizontalen Drehraten in der x-Achse beziehungsweise y-Achse realisiert. Die Fehlerzustände sind hierbei zwei Lageparametrierfehler $\sigma c_{31}$, $\sigma c_{32}$, zwei Winkelinkrementalfehler $\sigma\theta x,y$ und zwei Geschwindigkeitsfehler $\sigma vx,y$ definiert. Die Lageparameterfehler sind als additive Fehler zu den zugehörigen Richtungskosinusmatrixelementen $c_{31} = -\sin\theta$, $c_{32} = \sin\varphi \cos\theta$, definiert mit $\varphi$ und $\theta$ als Roll- und Nickwinkel.

Nachfolgend ist ein diskretes Fehlermodell des Teilfilters des Kalman-Filters 24 für die dynamische Horizontierung als Fehlermodell 6. Ordnung in zeitdiskreter Formulierung dargestellt.

$$\begin{bmatrix} \delta c_{31} \\ \delta\theta_y \\ \delta v_z \\ \hdashline \delta c_{32} \\ \delta\theta_z \\ \delta v_y \end{bmatrix}_{\kappa} = \begin{bmatrix} 1 & -c_{32} & 0 & \Delta\theta_z & 0 & 0 \\ 0 & 1 & 0 & 0 & 0 & 0 \\ g\Delta T & 0 & 1 & 0 & 0 & 0 \\ \hdashline -\Delta\theta_z & 0 & 0 & 1 & c_{33} & 0 \\ 0 & 0 & 0 & 0 & 1 & 0 \\ 0 & 0 & 0 & g\Delta T & 0 & 1 \end{bmatrix}_{\kappa-1} \cdot \begin{bmatrix} \delta c_{31} \\ \delta\theta_y \\ \delta v_z \\ \hdashline \delta c_{32} \\ \delta\theta_z \\ \delta v_y \end{bmatrix}_{\kappa-1} + \underline{w}_{\kappa-1}$$

$$\delta\underline{x}_{\kappa} = \underline{\Phi}_{\kappa-1} \quad \delta\underline{x}_{\kappa-1} + \underline{w}_{\kappa-1}$$

$$\begin{bmatrix} \Delta v_z \\ \hdashline \Delta v_y \end{bmatrix}_{\kappa} = \begin{bmatrix} 0 & 0 & 1 & 0 & 0 & 0 \\ \hdashline 0 & 0 & 0 & 0 & 0 & 1 \end{bmatrix} \cdot \delta\underline{x}_{\kappa} + \underline{v}_{\kappa}$$

Als Beobachtung $\Delta V_{x,y}$ ist - wie bereits erwähnt - die Differenz aus fahrzeugfester Inertialgeschwindigkeit (von der Geschwindigkeitsberechnung 22) und Weggebergeschwindigkeit (vom Weggeber 12) definiert:

$$\Delta\underline{v}^B_{ID} = \underline{v}^B_{INS} - \underline{v}^B_{DT} = (\Delta v_x \ \Delta v_y)^T$$

Für die Dimensionierung und die Integration des Teilfilters für die dynamische Horizontierung innerhalb des Kalman-Filters 24 gilt, daß im stochastischen Modell insbesondere solche Meßstörungen sorgfältig zu modulieren sind, die in bezug auf die Lageinformamion im Beschleunigungssignal als dynamische Störungen zu interpretieren sind, wobei die Verfügbarkeit der Weggebergeschwindigkeit als Informationsträger für die translatorische Bewegung zu berücksichtigen ist.

Die Filterschätzwerte des Teilfilters für die dynamische Horizontierung werden quasikontinuierlich in die Kurs-/Lagerechnung 20 des Navigationssystems 10 zurückgeführt. Im gezeigten Beispiel werden die Fehlerschätzwerte als Winkelinkrementkorrektur $\Delta\Theta_{x,y}$ als Drehratenschätzungen für die in der Instrumentierung fehlenden x-Kreisel und y-Kreisel bereitgestellt. Für die Aufschaltung der Korrekturen auf die Kurs/Lagerechnung 20 sind jedoch auch andere algorithmische Realisierungen denkbar. Nachfolgend ist die Korrekturgleichung als Winkelinkrementschätzung für die Prozeßrückführung gezeigt, die auf den Schätzwerten des Teilfilters dynamische Horizontierung des Kalman-Filters 24 basiert.

$$\begin{pmatrix} \Delta\theta_x \\ \Delta\theta_z \end{pmatrix}_{\kappa} = \underline{f}\left[\begin{pmatrix} \delta c_{31} \\ \delta c_{32} \end{pmatrix}_{\kappa} ; \begin{pmatrix} \delta\theta_z \\ \delta\theta_y \end{pmatrix}_{\kappa} ; \quad \Delta\theta_{z,\kappa} ; \underline{C}^R_{B,\kappa-1}\right]$$

Nachfolgend wird die Notwendigkeit der Drehratenschätzung in der fahrzeugfesten Horizontalebene und die Wirkungsweise in Verbindung mit der nichtlinearen Kurs-/Lagerechnung 20 an einem speziellen Fahrzeugmanöver näher erläutert. Hierzu ist in der Figur 2 ein Fahrzeug 38 schematisch angedeutet, welches sich in einer Steilkurventfahrt befindet. Mit $x^B$, $y^B$ und $z^B$ sind hierbei die fahrzeugfesten x-, y- beziehungsweise z-Achsen bezeichnet. Der Rollwinkel $\varphi$ zwischen der Horizontalen und der y-Achse ist als konstant angenommen. Der Nickwinkel $\theta$ in der x-Achse ist gleich. Null, während die Winkelgeschwindigkeit $\psi$ in der z-Achse des Fahrzeugs 38 ebenfalls als konstant angenommen wird. Bei diesem in Figur 2 dargestellten Manöver treten somit in der fahrzeugfesten y- und z-Achse stationäre Drehraten $\omega_{y,z}$ auf, wobei sich der Gesamtdrehratenvekzor $\underline{\omega}$ wie folgt darstellen läßt:

$$\underline{\omega}^B = \begin{pmatrix} 0 \\ \Psi \sin\varphi \\ \Psi \cos\varphi \end{pmatrix}$$

Für die Navigation eines Fahrzeugs ist die Größe eines Azimutfehlers bedeutsam. Nachfolgend werden Azimutfehlergleichungen für unterschiedliche Ausstattungen des Fahrzeugs 38 mit Meßeinrichtungen, insbesondere Drehratenmeßeinrichtungen, dargestellt. Für den Fall, daß eine Drehratenmessung in der hcrizontalen y-Achse des Fahrzeugs 38 vorgesehen ist, ergibt sich folgende Fehlermodellgleichung:

$$\frac{\Delta\Psi}{\omega_z} \approx -\varphi \cdot \frac{b_y}{g} + \overset{\approx 0}{\cancel{\varphi^2}}\,\delta SF_{G,y} + \delta SF_{G,z}$$

wobei das weiter unten angegebene typische Fehlerbudget

$$\frac{\Delta\Psi}{\omega_z} \approx 1.400 \text{ ppm}$$

beträgt.

Für einen. zweiten Fall wird angenommen, daß keine Drehratenmessung in der y-Achse und ebenfalls keine Drehratenschätzung in der y-Achse erfolgt. Hier ergibt sich folgende Fehlermodellgleichung:

$$\frac{\Delta\Psi}{\omega_z} \approx -\varphi^2 + \delta SF_{G,z}$$

wobei das typische Fehlerbudget

$$\frac{\Delta\Psi}{\omega_z} \approx 10.000 \text{ ppm}$$

beträgt.

In einem dritten Fall, und hierauf bezieht sich die Erfindung, erfolgt keine Drehratenmessung in der fahrzeugfesten y-Richtung, sondern eine Drehratenschätzung in der y-Achse, ergibt sich folgende Fehlermodellgleichung:

$$\frac{\Delta\Psi}{\omega_z} \approx -2\varphi \cdot \frac{b_y}{g} + \delta SF_{G,z}$$

wobei das typische Fehlerbudget

$$\frac{\Delta\Psi}{\omega_z} \approx 2.200 \text{ ppm}$$

beträgt.

Für das typische Fehlerbudget sind als Einzelfehler angenommen: $\delta SF_{y,z}$ ist der Skalenfaktorfehler des y-, z-Kreisels [1000 ppm], $b_y$ der Bias des y-Beschleunigungsmessers [10 mg] und $\varphi$ der Rollwinkel [0,1 rad] bezeichnet.

Ein Vergleich der Fehlermodellgleichungen zeigt, daß bei einer einachsigen Kreiselinstrumentierung mit Drehratenschätzung sich der vom Beschleunigungsmesser -Bias abhängige Fehler im Vergleich zur dreiachsigen Drehratenmessung zwar verdoppelt, aber der vom Quadrat des Rollwinkels abhängige dominante Fehler für den Fall der einachsigen Drehratenmessung ohne Drehratenschätzung verschwindet. Die erfindungsgemäße Verwendung der Drehratenschätzung bewirkt für das Zahlenbeispiel eines typischen Fehlerbudgets, entsprechend der genannten Werte, einen um etwa den Faktor 5 reduzierten Azimutfehler für eine einachsige Drehratenmessung, während der Azimutfehler für die in Figur 2 gezeigte Steilkurvenfahrt gegenüber einer dreiachsigen Drehratenmessung nur leicht zunimmt.

Das vorstehend erwähnte Steilkurvenmanöver ist lediglich beispielhaft. So sind bei typischen Fahrten des Fahrzeugs 38 durch Geländekonturen mit sich gleichzeitig ändernden Nick- und Rollwinkeln ebenfalls Manöver gegeben, für die die nichtlineare Charakteristik der Kurs-/Lagerechnung 20 von Bedeutung ist. Auch bei diesen Manövern bietet die Verwendung des dynamischen Horizontierungsfilters als Teilfilter des Kalman-Filters 24 mit Drehratenschätzung vergleichbare Verbesserungen in der Fehlerschätzung. Insgesamt läßt sich somit durch die Rückführung der Fehlerschätzung in die Kurs-/Lagerechnung 20 erreichen, daß trotz einer eingeschränkten Instrumentierung des Fahrzeugs, beispielsweise mit der Ausstattung lediglich eines z-Kreisels, und von Beschleunigungsmessern in den Fahrzeughorizontalachsen, die insbesondere durch den nichtlinearen Charakter der Kurs-/Lagerechnung 20 verursachten Fehlern vermieden beziehungsweise reduziert werden können. Der Einsatz des dynamischen Horizontierungsfilters erlaubt eine Schätzung der Drehratenkomponenten in der fahrzeugfesten Horizontalebene in einer für die jeweilige Anwendung angepaßten Bandbreite.

Im Beispiel wird von einer dynamischen Horizontierung durch einen Teilfilter des Kalman-Filters 24 ausgegangen, das auf dem diskreten Fehlermodell 6. Ordnung basiert. Variationen dieses Fehlermodells in bezug auf modifizierte Diskretierungsapproximationen sind möglich. Die Berechnung der Schätzwerte für die diskreten Winkelinkremente in der fahrzeugfesten x- und y-Achse kann in Verbindung mit der Kreiselmessung in z-Richtung als Eingangssignal für die Kurs-/Lagerechnung 20 verwendet werden. Alternative Formen der Verarbeitung der Schätzwerte des Kalman-Filters 24, das heißt des Teilfilters der dynamischen Horizontierung, in der Kurs-/Lagerechnung 20 sind möglich. Weiterhin kann die Dimensionierung des stochastischen Modells für das Kalman-Filter 24 adaptiv gestaltet werden. Eine bevorzugte Anwendung ist eine frequenzband-selektive Bewertung der translatorischen Störungen in den Beschleunigungsmessungen.

Darüber hinaus ist eine alternative Definition des Fehlerzustandes für das erläuterte Fehlermodell möglich. Hier kann beispielsweise eine Ordnungsreduktion auf einen Teilfilter vierter Ordnung durch Vernachlässigung der Fehlerzustände der Winkelinkrementfehler oder auch eine Transformation der Lagefehler, Drehratenfehler und Geschwindigkeitsfehler in andere Darstellungsformen erfolgen.

Der Teilfilter der dynamischen Horizontierung kann auch in dem gesamten Kalman-Filter 24 eingebunden bleiben, so daß der Kalman-Filter 24 insgesamt seine Funktion für das Navigationssystem 10 beibehalten kann. Darüber hinaus ist es möglich, den Teilfilter der dynamischen Horizontierung in zwei Teilfilter, bezogen auf zwei orthogonale Achsen, aufzuteilen. Hierbei können für die Filterdimensionierung die Kopplungen zwischen den beiden Teilfiltern vernachlässigt werden, wobei aber bei der Realisierung der Schätzfehlergleichungen diese Kopplungen als deterministische Eingangssignale berücksichtigt werden müssen. Für das erläuterte Fehlermodell hat die Vernachlässigung der Kopplungen zur Folge, daß zwei Teilfilter dritter Ordnung, beispielsweise als Nickwinkel- und Rollwinkelfilter, als stationäre Kalman-Filter ausgelegt werden können, da die zugehörigen Fehlermodelle dritter Ordnung nahezu zeitinvariant sind. Für die Realisierung der Schätzgleichungen ist aber die Berücksichtigung der $\delta\Theta_z$-Kopplungen wesentlich.

Im weiteren soll auf ein zweites Teilfilter des Kalman-Filters 24 eingegangen werden, das zur Positions- und Azimutkorrektur sowie zur Sensorkalibration dient. Das zweite Teilfilter bezieht sich auf die Fehlerzustände der Positionsfehler, der Azimutfehler, der z- Kreiselfehler (Drift, Skalenfaktorfehler) und des Skalenfaktorfehlers des Weggebers. Das zweite Teilfilter stellt somit einen Filter 6. Ordnung dar und bewirkt eine Kurs-, Positions-korrektur- und Sensorkalibrierung. Dieser zweite, nachfolgend als Positionsfilter bezeichnete Teilfilter des Kalman-Filters 24 kann außerhalb des zulässigen Arbeitsbereiches seines linearen Modells bei einer Erst inbetriebnahme oder einem Fahrzeugtransport mit ausgeschaltetem Navigationssystem 10 bedeutsam sein. Durch eine Überwachung des linearen Arbeitsbereiches des Positionsfilters ist eine automatische Initialisierung des Positionsfilters mit den zugehörigen Fehlerzuständen, für die eine Initialisierung notwendig ist, möglich. Hierbei sind die Betriebszustände des Positionsfilters, nämlich die Betriebszustände Fahrt des Fahrzeugs und Stillstand des Fahrzeugs zu unterscheiden. Eine Erkennung des Fahrzeugzustandes kann durch einen Überwachungsalgorithmus der einzelnen Meßeinrichtungen des Navigationssystems 10 erfolgen. Auf die Erkennung des Fahrzeugzustandes soll im Rahmen der vorliegenden Beschreibung jedoch nicht näher eingegangen werden.

Die Fehleranalyse basiert auf einer transformierten Form des Fehlermodells des Positionsfilters, also des zweiten Teilfilters des KalmanFilters 24, mit folgenden modifizierten Fehlerzuständen:

Die Positionsfehler werden von einer erdfesten Darstellung $\delta\varphi$ und $\delta\lambda$ in eine auf die Horizontalebene projizierte fahrzeugfeste Darstellung $\delta\rho_{x,y}$ transformiert.

In der Figur 3 ist das Navigationssystem 10 in einer weiteren Ausführungsvariante gezeigt, wobei gleiche Teile wie in Figur 1 mit gleichen Bezugszeichen versehen und nicht nochmals erläutert sind. Zu der in Figur 1 gezeigten Ausführungsvariante ist zusätzlich ein Transformationsglied 40 vorgesehen, das die dem Kalman-Filter 24 zugeführten

Beobachtungen der Position $\Delta P$ und der Geschwindigkeit $\Delta v$ über eine Matrix in ein fahrzeugfestes Koordinatensystem transformiert, so daß die innerhalb des Positionsfilters bereits in die fahrzeugfeste Form transformierten Fehlerzustände auf ebenfalls in die fahrzeugfeste Form transformierte Beobachtungen zurückgreifen können. Hierdurch wird eine weitere Vereinfachung des Fehlermodells möglich.

Denn dadurch wird eine Aufteilung des Fehlerzustandes des Positionsfilters in seinen Along-Track-Fehler, dem Along-Track-Positionsfehler und dem Weggeberskalenfaktorfehler $\delta SF_{DT}$, und seinem Cross-Track-Fehler, dem Cross-Track-Positionsfehler $\delta_{Py}$, dem Azimutfehler $\varepsilon_D$ und den z-Kreiselfehler, dem Drift fehler $d_Z$ und dem Skalenfaktorfehler $\delta SF_{GZ}$ ermöglicht.

In der Figur 4 ist die Fehlerschätzgleichung des Positionsfilters in kontinuierlicher Form, dargestellt, und zwar in der Form mit einem in eine fahrzeugfeste Darstellung transformierten Fehlerzustand. Da der Fehlerzustand des Skalenfaktorfehlers des z-Kreisels für die folgende Fehleranalyse vernachlässigbar ist, wurde dieser aus Gründen der vereinfachten Darstellung nicht weiter berücksichtigt.

In der Figur 5 ist ein Gesamtfehlermodell für eine Horizontalnavigation einer gestützten Koppelnavigation dargestellt. Das Fehlermodell gemäß der Figur 5 umfaßt somit die nichtlinearen Navigations-algorithmen in Verbindung mit dem auf einem linearen Modell basierenden Positionsfilter als Teilfilter des Kalman-Filters 24 und der Rückführung der Filterschätzwerte als Korrektur in die Navigationsalgorithmen.

Nachfolgend soll auf die Unterschiede der in den Figuren 4 und 5 dargestellten Fehlermodelle eingegangen werden.

Bei dem in Figur 4 gezeigten Fehlermodell sind die Fehlerschätzwerte dargestellt, während die in Figur 5 dargestellten Fehlerzustände den Gesamtfehler der berechneten Navigationsgrößen gegenüber den tatsächlichen Navigationsrößen beschreibt. Das Fehlermodell gemäß Figur 5 enthält nichtlineare Blöcke des Azimutfehlers $\delta\psi$ mit der Eigenschaft, daß für kleine Azimutfehler $\delta\psi$ die Fehlerschätzgleichung gemäß Figur 5 sich an die Struktur der Fehlerschätzgleichung gemäß Figur 4 angleicht.

Die Analyse des Gesamtfehlermodells gemäß der Figur 5 zeigt dann Fehlfunktionen des Navigationssystems 10 auf, wenn der Azimutfehler $\delta\psi$ große Werte annimmt. Einerseits kann bei großen Werten für den Azimutfehler $\delta\psi$ größer 90° das Fehlermodell instabil werden, während andererseits über die zusätzliche Kopplung zum Along-Track-Teilfilter des Positionsfilters für große Azimutfehler $\delta\psi$ der Weggeberskalenfaktor dekalibriert werden kann. Die Ursachen für einen Azimutfehler $\delta\psi$ können in einem großen Ausgangsfehler $\delta\psi(0)$liegen oder auch durch eine Stützung mit einem sehr großen Positionsfehler verursacht werden. Beide Fehlerursachen treten beispielsweise durch fehlerhafte Eingaben oder nach einem Transport des Fahrzeugs bei abgeschaltetem Navigationssystem 10 mit einer eventuellen automatischen GPS-Stützung nach dem Wiedereinschalten auf, da für normale Betriebszustände immer das Navigationsergebnis vor dem letzten Abschalten gespeichert wird.

Um die Dekalibration des Positionsfilters und damit des gesamten Navigationssystems 10 zu vermeiden, wird der Positionsfilter während des durch eine Fahrt charakterisierten Betriebszustandes des Fahrzeugs in seinem linearen Arbeitsbereich überwacht. Hierbei wird jede dem Positionsfilter zugeführte Stützposition, wie die Figuren 4 und 5 zeigen, auf Plausibilität geprüft. Nur bei Erfüllung der Plausibilitätsbedingungen wird die Positionsstützung durchgeführt. Werden die Plausibilitätsbedingungen nicht erfüllt, wird das Navigationssystem 10 mit der Stützposition initialisiert und das Positionsfilter in einen definerten Status (Default-Status) versetzt.

Nach Einschalten des Navigationssystems 10 wird die erste Positionsstützung zur Initialisierung verwendet und das Positionsfilter in den Default-Status versetzt. Der Azimut wird hierbei grundsätzlich, außer bei einer Azimuteingabe oder einer Korrektur durch eine Azimutüberwachung, beibehalten.

Die Azimutüberwachung kann derart erfolgen, daß neben der gestützten Navigationsrechnung eine ungestützte Kontrollnavigation berechnet wird, die an jedem Kontrollpunkt mit der gestützten Navigation abgeglichen wird. Die ungestützte Kontrollnavigation wird mit einem unabhängig bestimmten Grobazimut verglichen. Dieser Grobazimut kann beispielsweise über eine Triangulation mit zwei Referenzpunkten, die beispielsweise über den GPS-Empfänger 30 und/oder Kartenpunkte 32 bereitgestellt werden, bestimmt werden oder direkt als GPS-Azimut ausgelesen werden beziehungsweise aus der GPS-Geschwindigkeit bestimmt werden.

Wenn die ermittelte Azimutabweichung hinreichend klein ist, kann die Navigationsrechnung fortgesetzt werden. Andernfalls wird die Navigation mit der Referenzposition dem Grobazimut initialisiert und das Positionsfilter in den definierten Default-Status versetzt. Die Kontrollnavigation wird nach Abgleich mit der gestützten Navigation nach jedem Kontrollpunkt neu gestartet. Der erwähnte Default-Status des Positionsfilters bewirkt, daß alle Sensorkalibrationswerte auf bestimmte gespeicherte, zuvor auf ihre Richtigkeit überprüfte Werte zurückgesetzt werden. Dies können sehr vorteilhaft Sensorkalibrationswerte sein, die bei der letzten durchgeführten Kontrollnavigation ermittelt wurden, die zu keiner Rücksetzung des Positionsfilters auf den Default-Status geführt haben. Um eine ausreichende Lernfähigkeit des Positionsfilters zu erreichen, wird die Kovarianzmatrix des Positionsfilters diagonalisiert und in der Hauptdiagonalen mit geeigneten Default-Werten besetzt.

Sehr vorteilhaft können für die Plausibilitätsprüfung der Stützpositionen und der Azimut-Überwachung statistische Fehlerbewertungsverfahren verwendet werden, die als Selbstdiagnose die im Kalman-Filter 24 berechnete

Kovarianzinformationen zu den Filterschätzgrößen benutzen.

Wurde bisher bei der Überwachung des linearen Arbeitsbereiches des Positionsfilters von einem durch Fahrt gekennzeichneten Betriebszustand des Fahrzeugs ausgegangen, läßt sich das Positionsfilter auch so modifizieren, daß sich die Überwachung des linearen Arbeitsbereiches auch bei einem durch einen Stillstand gekennzeichneten Betriebszustand des Fahrzeugs erreichen läßt. Der durch den Stillstand gekennzeichnete Bewegungszustand des Fahrzeugs kann mittels eines Algorithmus identifiziert und überwacht werden, der durch eine Auswertung der Sensoren des Navigationssystems ausgelöst wird. Bei Erkennen des Stillstand-Zustands ergibt sich, daß die Position konstant ist, die Geschwindigkeit gleich Null ist und der Azimut ebenfalls konstant ist.

In der Figur 6 wird eine modifizierte Signalverarbeitungsstruktur der gestützten Koppelnavigation gezeigt, die an den durch einen Stillstand des Fahrzeugs gekennzeichneten Zustand angepaßt ist. Gleiche Teile wie in den vorhergehenden Figuren sind wiederum mit gleichen Bezugszeichen versehen und nicht nochmals erläutert.

Durch die erfolgte Definition des Stillstandszustandes ist der Koppelkurs konstant. Die von dem z-Kreisel 14 bereitgestellten Meßsignale werden als Fehlersignal interpretiert aus diesem Grunde nicht mehr der Kurs-/Lagerechnung 20, sondern nur noch direkt als Beobachtung dem Kalman-Filter 24 zugeführt. Darüber hinaus ist durch den Stillstand des Fahrzeugs die von dem GPS-Empfänger 30 an sich bereitgestellte Geschwindigkeitsmessung nicht mehr verfügbar. Für Gerätekonfigurationen, die (optional) einen nordsuchenden Kreisel als zusätzliche Baugruppe enthalten, kann im Stillstand der von der Koppelnavigation 18 bereitgestellte Azimut mit dem des nordsuchenden Kreisels 42 verglichen werden, so daß eine Azimut-Korrektur aus dem Koppelkurs und dem gelieferter Meßwert des nordsuchenden Kreisels 42 ermittelt und als Beobachtung auf das Kalman-Filter 24 aufgeschaltet werden kann.

Anhand der Figur 7 wird die Auswirkung des durch den Stillstand gekennzeichneten Fahrzeugzustandes und der in Figur 6 gezeigten strukturellen Modifikation des Navigationsalgorithmus auf die Fehlerschätzgleichungen des Positionsfilters verdeutlicht. Hierbei werden folgende Unterschiede zu den Fehlerschätzgleichungen gemäß den Figuren 4 und 5 deutlich. Durch den Stillstand des Fahrzeugs steht ein kontinuierlicher Meßwert des z-Kreisels 14 als Filterbeobachtung zur Verfügung, so daß im Stillstand eine kontinuierliche Schätzung der Kreiseldrift erfolgen kann. Bei der Verfügbarkeit von Positions- beziehungsweise Azimutmessungen können diese neben einer Verbesserung der zugehörigen Schätzgrößen durch Mittelung auch eine Verbesserung der restlichen Schätzgrößen zur Folge haben, da bei einem dem Stillstand vorausgegangenen ungestützten Fahrtabschnitt Kreuzkorrelationen zwischen den einzelnen Fehlerzuständen aufgebaut werden können.

Darüber hinaus kann durch eine Beibehaltung der Überwachung der Positions- und Azimutstützung, wie dies bei der Signalverarbeitung in dem durch Fahrt gekennzeichneten Fahrzeugzustand erfolgte, sichergestellt werden, daß das Positionsfilter nicht außerhalb des zulässigen linearen Arbeitsbereiches betrieben wird. Im Unterschied zum Betriebszustand der Fahrt besteht jedoch im Betriebszustand des Stillstandes keine Notwendigkeit, den Driftzustand und die zugehörige Korrelation in die Rücksetzung des Positionsfilters auf den Default-Status miteinzubeziehen.

Insgesamt wird es also möglich, indem die von dem z-Kreisel 14 gelieferten Signale bei Stillstand des Fahrzeugs als direkte Beobachtung dem Kalman-Filter 24 aufgeschaltet werden, eine kontinuierliche Schätzung der Kreiseldrift im Stillstand durchzuführen. Gleichzeitig wird durch den Erhalt der Struktur des Positionsfilters, wie in Figur 7 gezeigt, sichergestellt, daß eine Positions- und/oder Azimutstützung Korrekturen für alle Fehlerzustände zur Folge haben können, wenn entsprechende Kreuzkorrelationen, zum Beispiel in einem vorhergehenden ungestützten Fahrtabschnitt, aufgebaut worden sind.

Durch Beibehaltung der Positions- und Azimutüberwachung auch während des Stillstandzustandes wird eine Dekalibration des Positionsfilters vermieden. Hierbei ist für die Definition des bereits erläuterten Default-Status des Positionsfilters zu beachten, daß eine Dekalibration der Driftschätzung nicht möglich ist und deshalb der Driftzustand mit zugehöriger Kovarianz aus der Rücksetzung auf den Default-Status im Stillstand auszunehmen ist.

## Patentansprüche

1. Navigationssystem für ein Fahrzeug, insbesondere für ein Landfahrzeug, mit wenigstens einem einachsigen Kreisel (14) für die Fahrzeuchochachse (z-Achse), mit zwei Beschleunigungsmessern (16) in der horizontalen Fahrzeugebene (x-Achse, y-Achse), einer fahrzeugfesten Vorrichtung zur Geschwindigkeitsmessung (22) mit einer Stützsignaleinrichtung (30, 32), insbesondere einem Satellitenempfänger (30) und/oder einer Karte (32), zur Stützung von Kurs und Position des Fahrzeugs und mit einer Steuerung (34, 36), die aus den gemessenen und den von der Stützsignaleinrichtung gelieferten und gespeicherten Signalen mit Hilfe eines geeigneten Kalman-Filters (24) die berechnete Fahrzeugposition und/oder die Fahrtrichtung korrigiert, **dadurch gekennzeichnet,** daß dem Kalman-Filter (24) wenigstens ein Teilfilter aus einem ersten Teilfilter für eine dynamische Horizontierung und einem zweiten Teilfilter, das als Positionsfilter eine Kurs-, Positions- und Sensorkalibration bewirkt, zugeordnet ist.

2. Navigationssystem nach Anspruch 1, **dadurch gekennzeichnet,** daß das Teilfilter der dynamischen Horizontierung eine Drehratenschätzung in der fahrzeugfesten Horizontalebene durchführt und so erhaltene Schätzwerte quasikontinuierlich in das Navigationssystem (10) zurückgeführt werden.

**3.** Navigationssystem nach Anspruch 2, **dadurch gekennzeichnet,** daß die Schätzwerte in einer der jeweiligen Anwendung angepaßten geeigneten Bandbreite zurückgeführt werden.

**4.** Navigationssystem nach Anspruch 2 oder 3, **dadurch gekennzeichnet,** daß eine Rückführung von den Drehratenschätzwerten äquivalenten Schätzwerten erfolgt.

**5.** Navigationssystem nach Anspruch 4, **dadurch gekennzeichnet,** daß Schätzwerte der diskreten Winkelinkremente in den horizontalen Fahrzeugachsen (x-Achse, y-Achse) rückgeführt werden.

**6.** Navigationssysnem nach einem der vorhergehenden Ansprüche, **dadurch gekennzeichnet,** daß die Ordnung des Teilfilters an eine Definition der Fehlerzustände anpaßbar ist.

**7.** Navigationssystem nach Anspruch 6, **dadurch gekennzeichnet,** daß das Teilfilter der dynamischen Horizontierung auf einem diskreten Fehlermodell 6. Ordnung mit folgender Formulierung beruht

$$\underbrace{\begin{bmatrix} \delta c_{31} \\ \delta\theta_y \\ \delta v_x \\ \hdashline \delta c_{32} \\ \delta\theta_x \\ \delta v_y \end{bmatrix}_K}_{\delta \underline{x}_K} = \underbrace{\begin{bmatrix} 1 & -c_{33} & 0 & \Delta\theta_z & 0 & 0 \\ 0 & 1 & 0 & 0 & 0 & 0 \\ g\Delta T & 0 & 1 & 0 & 0 & 0 \\ \hdashline -\Delta\theta_z & 0 & 0 & 1 & c_{33} & 0 \\ 0 & 0 & 0 & 0 & 1 & 0 \\ 0 & 0 & 0 & g\Delta T & 0 & 1 \end{bmatrix}_{K-1}}_{\underline{\Phi}_{K-1}} \cdot \underbrace{\begin{bmatrix} \delta c_{31} \\ \delta\theta_y \\ \delta v_x \\ \hdashline \delta c_{32} \\ \delta\theta_x \\ \delta v_y \end{bmatrix}_{K-1}}_{\delta \underline{x}_{K-1}} + \underline{w}_{K-1}$$

$$\begin{bmatrix} \Delta v_x \\ \hdashline \Delta v_y \end{bmatrix}_K = \begin{bmatrix} 0 & 0 & 1 & 0 & 0 & 0 \\ \hdashline 0 & 0 & 0 & 0 & 0 & 1 \end{bmatrix} \cdot \delta \underline{x}_K + \underline{v}_K$$

**8.** Navigationssystem nach eimem der vorhergehenden Ansprüche, **dadurch gekennzeichnet,** daß das Teilfilter der dynamischen Horizontierung als zwei stationäre Kalmanfilter 3. Ordnung dimensioniert ist, und Kopplungen zwischen den Teilfiltern 3. Ordnung bei der Realisierung als deterministische Eingangssignale berücksichtigt werden.

**9.** Navigationssystem nach einem der vorhergehenden Ansprüche, **dadurch gekennzeichnet,** daß das Teilfilter der dynamischen Horizontierung in das Kalman-Filter (24) integriert ist.

**10.** Navigationssystem nach einem der vorhergehenden Ansprüche, **dadurch gekennzeichnet,** daß eine adaptive Dimensionierung des stochastischen Modells des Kalman-Filters (24), insbesondere eine frequenzbandselektive Bewertung der translatorischen Störungen in den Beschleunigungsmessungen, erfolgt.

**11.** Navigationssystem nach einem der vorhergehenden Ansprüche, **dadurch gekennzeichnet,** daß bei dem als Positionsfilter ausgebildeten zweiten Teilfilter verwendete Stützpositionen auf ihre Plausibilität überprüft werden und bei nicht plausiblen Stützpositionen eine Rücksetzung des Positionsfilters in einen definierten Status (Default-Status) mit gespeicherten, auf ihre Richtigkeit überprüfte Sensorkalibrationswerte erfolgt.

**12.** Navigationssystem nach Anspruch 11, **dadurch gekennzeichnet,** daß als überprüfte Sensorkalibrationswerte die Werte der letzten Kontrollnavigation verwendet werden, die nicht zu einer Rücksetzung des Positionsfilters geführt haben.

**13.** Navigationssystem nach Anspruch 11 oder 12, **dadurch gekennzeichnet,** daß beim erstmaligen Einschalten des Positionsfilters dieser in den Default-Status versetzt wird.

**14.** Navigationssystem nach einem der Ansprüche 11 bis 13, **dadurch gekennzeichnet,** daß zusätzlich zu der Plausibilitätsprüfung der Stützpositionen eine Azimutüberwachnung erfolgt.

**15.** Navigationssystem nach Anspruch 14, **dadurch gekennzeichnet,** daß neben der gestützen Navigationsrechnung eine ungestützte Kontrollnavigation berechnet wird, die an jedem Kontrollpunkt mit der gestützen Navigationsrechnung abgeglichen wird.

**16.** Navigationssystem nach Anspruch 14 oder 15, **dadurch gekennzeichnet,** daß zur die Plausibilirätsüberprüfung und die Azimutüberwachung statistische Fehlerbewertungsverfahren verwendet werden, die als Selbstdiagnose die im Kalman-Filter (24) berechnete Kovarianzinformationen in den Filterschätzgrößen benutzen.

**17.** Navigationssystem nach einem der Ansprüche 11 bis 16, **dadurch gekennzeichnet,** daß bei über einen Algorithmus erkanntem Stillstand des Fahrzeugs eine Umschaltung des Positionsfilters erfolgt, wobei ein jetzt kontinuierlicher Meßwert eines z-Kreisels als Besbachtung auf das Kalman-Filter (24) geschaltet wird.

## Claims

**1.** A navigation system for a vehicle, in particular for a land craft, with at least one single-axis gyro (14) for the vertical axis (z - axis) of the vehicle, with two acceleration gauges (16) in the horizontal plane of the vehicle (x - axis, y - axis), with a vehicle-mounted device for measuring speed (22) having fixed-base signal equipment (30, 32) in particular a satellite receiver (30) and/or a map-card (32) for fixing the course and position of the vehicle, and with a control system (34, 36) which, from the measured signals stored and supplied by the fixed-base signal equipment and with the aid of a suitable Kalman filter (24), corrects the calculated position of the vehicle and/or the direction of travel, characterised in that, associated to the Kalman filter (24), there is at least one section filter consisting of an initial section filter for dynamic horizontal levelling and a second section filter which, as a positional filter, effects a calibration of course, position and sensor.

**2.** A navigation system according to claim 1, characterised in that the section filter for the dynamic horizontal levelling carries out an estimation of revolution rate in the on-board horizontal plane and the estimated values thus obtained are fed back, to a certain extent continuously, into the navigation system (10).

**3.** A navigation system according to claim 2, characterised in that the estimated values are fed back in a suitable band-width appropriate to the equipment being used.

**4.** A navigation system according to claim 2 or 3, characterised in that a feed-back of the estimated values equivalent to the estimated revolution rate values is produced.

**5.** A navigation system according to claim 4, characterised in that estimated values of the discrete angle increments in the horizontal vehicle axes (x - axis, y - axis) are fed back.

**6.** A navigation system according to one of the preceding claims, characterised in that the order of the section filter can be matched to a definition of the error states.

**7.** A navigation system according to claim 6, characterised in that the section filter for the dynamic horizontal levelling is based on a discrete error model of the 6th order having the following formula:

$$\underbrace{\begin{bmatrix} \delta C_{31} \\ \delta\theta_Y \\ \delta v_Z \\ \hline \delta C_{32} \\ \delta\theta_Z \\ \delta v_Y \end{bmatrix}_{\kappa}}_{\delta\underline{X}_{\kappa}} = \underbrace{\left[\begin{array}{ccc|ccc} 1 & -C_{32} & 0 & \Delta\theta_Z & 0 & 0 \\ 0 & 1 & 0 & 0 & 0 & 0 \\ g\Delta T & 0 & 1 & 0 & 0 & 0 \\ \hline -\Delta\theta_Z & 0 & 0 & 1 & C_{33} & 0 \\ 0 & 0 & 0 & 0 & 1 & 0 \\ 0 & 0 & 0 & g\Delta T & 0 & 1 \end{array}\right]_{\kappa-1}}_{\underline{\Phi}_{\kappa-1}} \cdot \underbrace{\begin{bmatrix} \delta C_{31} \\ \delta\theta_Y \\ \delta v_Z \\ \hline \delta C_{32} \\ \delta\theta_Z \\ \delta v_Y \end{bmatrix}_{\kappa-1}}_{\delta\underline{X}_{\kappa-1}} + \underline{W}_{\kappa-1}$$

$$\begin{bmatrix} \Delta v_Z \\ \hline \Delta v_Y \end{bmatrix}_{\kappa} = \left[\begin{array}{ccc|ccc} 0 & 0 & 1 & 0 & 0 & 0 \\ \hline 0 & 0 & 0 & 0 & 0 & 1 \end{array}\right] \cdot \delta\underline{X}_{\kappa} + \underline{V}_{\kappa}$$

**8.** A navigation system according to one of the preceding claims, characterised in that the section filter for the dynamic horizontal levelling is dimensioned as two stationary Kalman filters of the 3rd order, and couplings between the section filters of the 3rd order are considered as deterministic input signals when converted.

**9.** A navigation system according to one of the preceding claims, characterised in that the section filter for the dynamic horizontal levelling is integrated with the Kalman filter (24).

**10.** A navigation system according to one of the preceding claims, characterised in that an adaptive dimensioning of the stochastic model of the Kalman filter (24) is effected, more specifically a frequency band selective evaluation of the translatory interferences in the acceleration measurements.

**11.** A navigation system according to one of the preceding claims, characterised in that any fixed-base positions used in the case of the second section filter in its construction as a positional filter are examined for their plausibility and, in the event of non-plausible fixed-base positions, a re-setting of the positional filter into a defined status (default status) is effected having stored sensor calibration values which have been examined for accuracy.

**12.** A navigation system according to claim 11, characterised in that, as the examined sensor calibration values, the values of the latest control navigation are used that have not produced a re-setting of the positional filter.

**13.** A navigation system according to claim 11 or 12, characterised in that, when the positional filter is switched on for the first time, it is returned to the default status.

**14.** A navigation system according to one of the claims 11 to 13, characterised in that, in addition to the examination for plausibility in respect of the fixed-base positions, a monitoring of the azimuth is effected.

**15.** A navigation system according to claim 14, characterised in that, in addition to the supported, fixed-base navigation reckoning, a non-supported control navigation is calculated, which, at each control point, is justified with the supported navigation reckoning.

**16.** A navigation system according to claim 14 or 15, characterised in that, for the examination as to plausibility and for the monitoring of the azimuth, statistical error evaluation procedures are used which, as a self-diagnosis, utilise in the estimated filter sizes the covariant information data calculated in the Kalman filter (24).

17. A navigation system according to one of the claims 11 to 16, characterised in that, in the event of the vehicle being brought to a standstill, which is recognised by means of an algorithm, a switchover of the positional filter is effected, whereby a now continuous reading of a z-gyro is transferred as an observation to the Kalman filter (24).

## Revendications

1. Système de navigation pour un véhicule, en particulier pour un véhicule terrestre, comprenant au moins un gyroscope à un axe (14) pour l'axe vertical de véhicule (axe z), deux accéléromètres (16) dans le plan horizontal de véhicule (axe x, axe y), un dispositif de mesure de vitesse (22) solidaire du véhicule avec un dispositif à signal d'assistance (30, 32), en particulier avec un récepteur de satellite (30) et/ou une carte (32), pour indiquer le cap et la position du véhicule, et un moyen de commande (34, 36) qui, à partir des signaux mesurés et des signaux fournis et mémorisés par le dispositif à signal d'assistance, corrige, à l'aide d'un filtre de Kalman approprié (24), la position du véhicule et/ou la direction de déplacement calculées, caractérisé en ce qu'au filtre de Kalman (24) est associé au moins un filtre partiel constitué d'un premier filtre partiel pour un ajustement d'horizon dynamique et d'un second filtre partiel qui, en tant que filtre de position, procède à un étalonnage de cap, de position et de détection.

2. Système de navigation selon la revendication 1, caractérisé en ce que le filtre partiel d'ajustement d'horizon dynamique effectue une estimation de degré de rotation dans le plan horizontal solidaire du véhicule, et les valeurs estimatives ainsi obtenues sont renvoyées de manière quasi continue au système de navigation (10).

3. Système de navigation selon la revendication 2, caractérisé en ce que les valeurs estimatives sont renvoyées dans une largeur de bande appropriée adaptée à l'application rencontrée.

4. Système de navigation selon la revendication 2 ou 3, caractérisé en ce que des valeurs estimatives équivalentes aux valeurs estimatives de degré de rotation sont renvoyées.

5. Système de navigation selon la revendication 4, caractérisé en ce que des valeurs estimatives des incréments angulaires discrets dans les axes horizontaux de véhicule (axe x, axe y) sont renvoyées.

6. Système de navigation selon une des revendications précédentes, caractérisé en ce que l'ordre du filtre partiel est adaptable à une définition des états d'erreur.

7. Système de navigation selon la revendication 6, caractérisé en ce que le filtre partiel d'ajustement d'horizon dynamique repose sur un modèle d'erreur discret de 6$^{e}$ ordre avec la formulation suivante :

$$\underbrace{\begin{bmatrix} \delta c_{31} \\ \delta\theta_y \\ \delta v_x \\ \hdashline \delta c_{32} \\ \delta\theta_x \\ \delta v_y \end{bmatrix}_k}_{\delta \underline{x}_k} = \underbrace{\begin{bmatrix} 1 & -c_{33} & 0 & \Delta\theta_z & 0 & 0 \\ 0 & 1 & 0 & 0 & 0 & 0 \\ g\Delta T & 0 & 1 & 0 & 0 & 0 \\ \hdashline -\Delta\theta_z & 0 & 0 & 1 & c_{33} & 0 \\ 0 & 0 & 0 & 0 & 1 & 0 \\ 0 & 0 & 0 & g\Delta T & 0 & 1 \end{bmatrix}_{k-1}}_{\underline{\Phi}_{k-1}} \cdot \underbrace{\begin{bmatrix} \delta c_{31} \\ \delta\theta_y \\ \delta v_x \\ \hdashline \delta c_{32} \\ \delta\theta_x \\ \delta v_y \end{bmatrix}_{k-1}}_{\delta \underline{x}_{k-1}} + \underline{w}_{k-1}$$

$$\begin{bmatrix} \Delta v_x \\ \hdashline \Delta v_y \end{bmatrix}_k = \begin{bmatrix} 0 & 0 & 1 & 0 & 0 & 0 \\ \hdashline 0 & 0 & 0 & 0 & 0 & 1 \end{bmatrix} \cdot \delta \underline{x}_k + \underline{v}_k$$

8. Système de navigation selon une des revendications précédentes, caractérisé en ce que le filtre partiel d'ajustement d'horizon dynamique est dimensionné sous la forme de deux filtres de Kalman stationnaires de 3$^{e}$ ordre, et

des couplages entre les filtres partiels de 3e ordre sont pris en compte lors de la réalisation en tant que signaux d'entrée déterministes.

**9.** Système de navigation selon une des revendications précédentes, caractérisé en ce que le filtre partiel d'ajustement d'horizon dynamique est intégré au filtre de Kalman (24).

**10.** Système de navigation selon une des revendications précédentes, caractérisé en ce qu'il est prévu un dimensionnement adaptatif du modèle stochastique du filtre de Kalman (24), en particulier une évaluation avec sélection de bande de fréquence des perturbations de translation dans les mesures d'accélération.

**11.** Système de navigation selon une des revendications précédentes, caractérisé en ce que, pour le second filtre partiel conformé en filtre de position, la plausibilité des positions d'assistance utilisées est contrôlée et, en présence de positions d'assistance non plausibles, le filtre de position est rétrogradé à un état défini (état par défaut) avec des valeurs d'étalonnage de détection mémorisées à exactitude contrôlée.

**12.** Système de navigation selon la revendication 11, caractérisé en ce que les valeurs d'étalonnage de détection contrôlées utilisées sont les valeurs de la dernière navigation de contrôle qui n'ont pas donné lieu à une rétrogradation du filtre de position.

**13.** Système de navigation selon la revendication 11 ou 12, caractérisé en ce que, lors de la première mise en circuit du filtre de position, celui-ci est mis dans un état par défaut.

**14.** Système de navigation selon l'une des revendications 11 à 13, caractérisé en ce qu'une surveillance azimutale est effectuée en plus du contrôle de plausibilité des positions d'assistance.

**15.** Système de navigation selon la revendication 14, caractérisé en ce qu'en marge du calcul de navigation est calculée une navigation de contrôle non assistée qui est compensée en chaque point de contrôle par le calcul de navigation assisté.

**16.** Système de navigation selon la revendication 14 ou 15, caractérisé en ce qu'on applique, pour le contrôle de plausibilité et pour la surveillance azimutale, des procédés statistiques d'évaluation d'erreurs qui, à titre d'autodiagnostic, utilisent les informations de covariance calculées dans le filtre de Kalman (24) et contenues dans les grandeurs estimatives des filtres.

**17.** Système de navigation selon l'une des revendications 11 à 16, caractérisé en ce que, en cas d'arrêt du véhicule décelé par un algorithme, il se produit une commutation du filtre de position, une valeur mesurée désormais continue d'un gyroscope d'axe z étant appliquée au filtre de Kalman (24) à titre d'observation.

Fig. 1

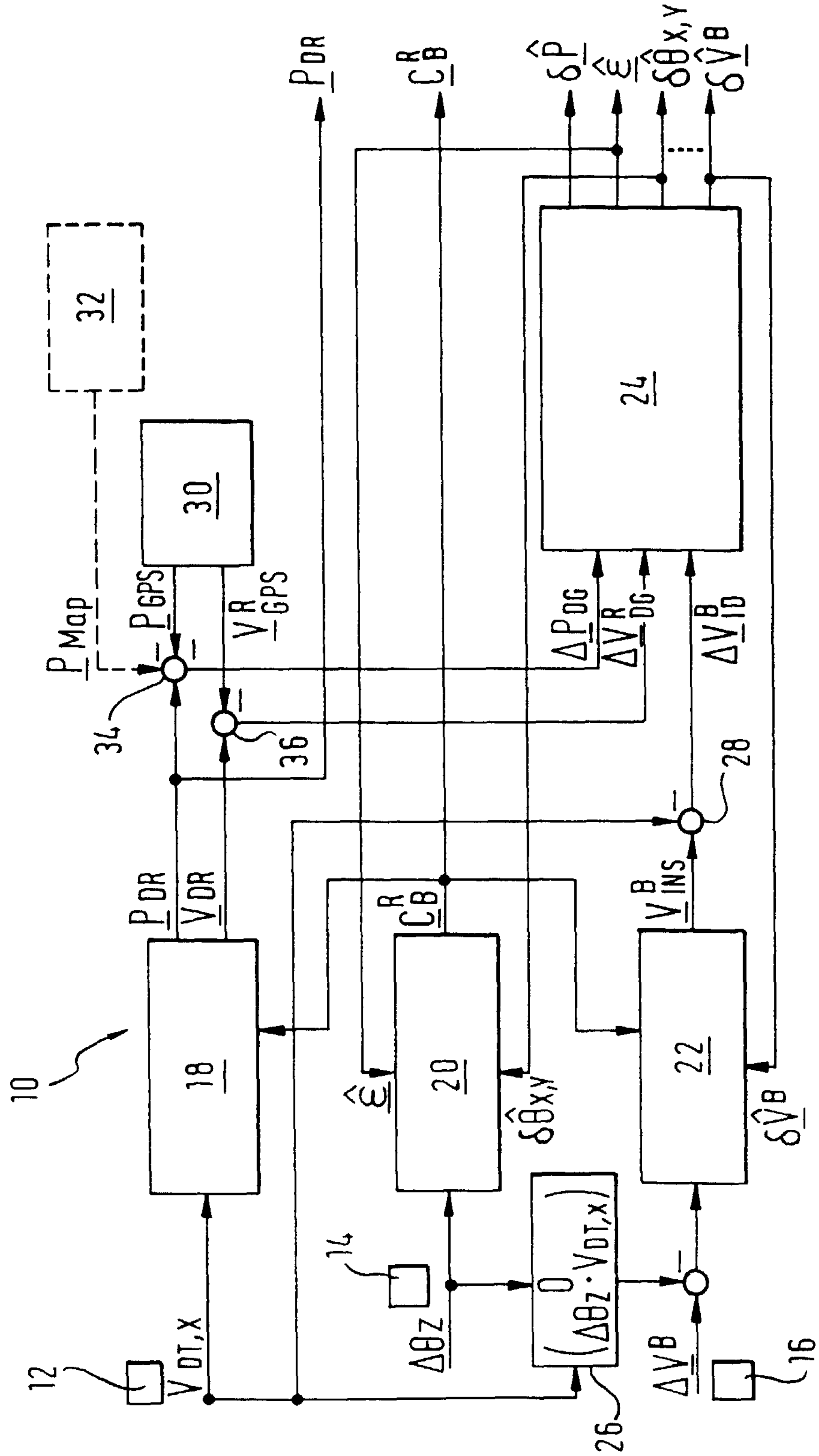

Fig. 2

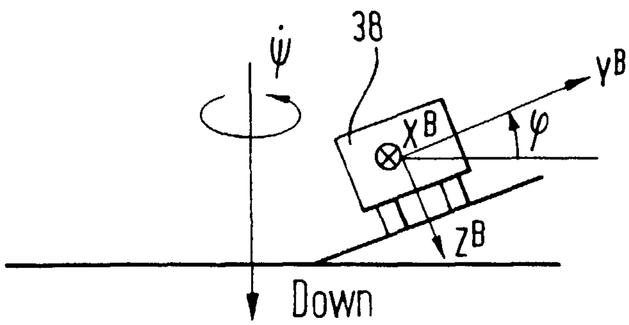

Fig. 3

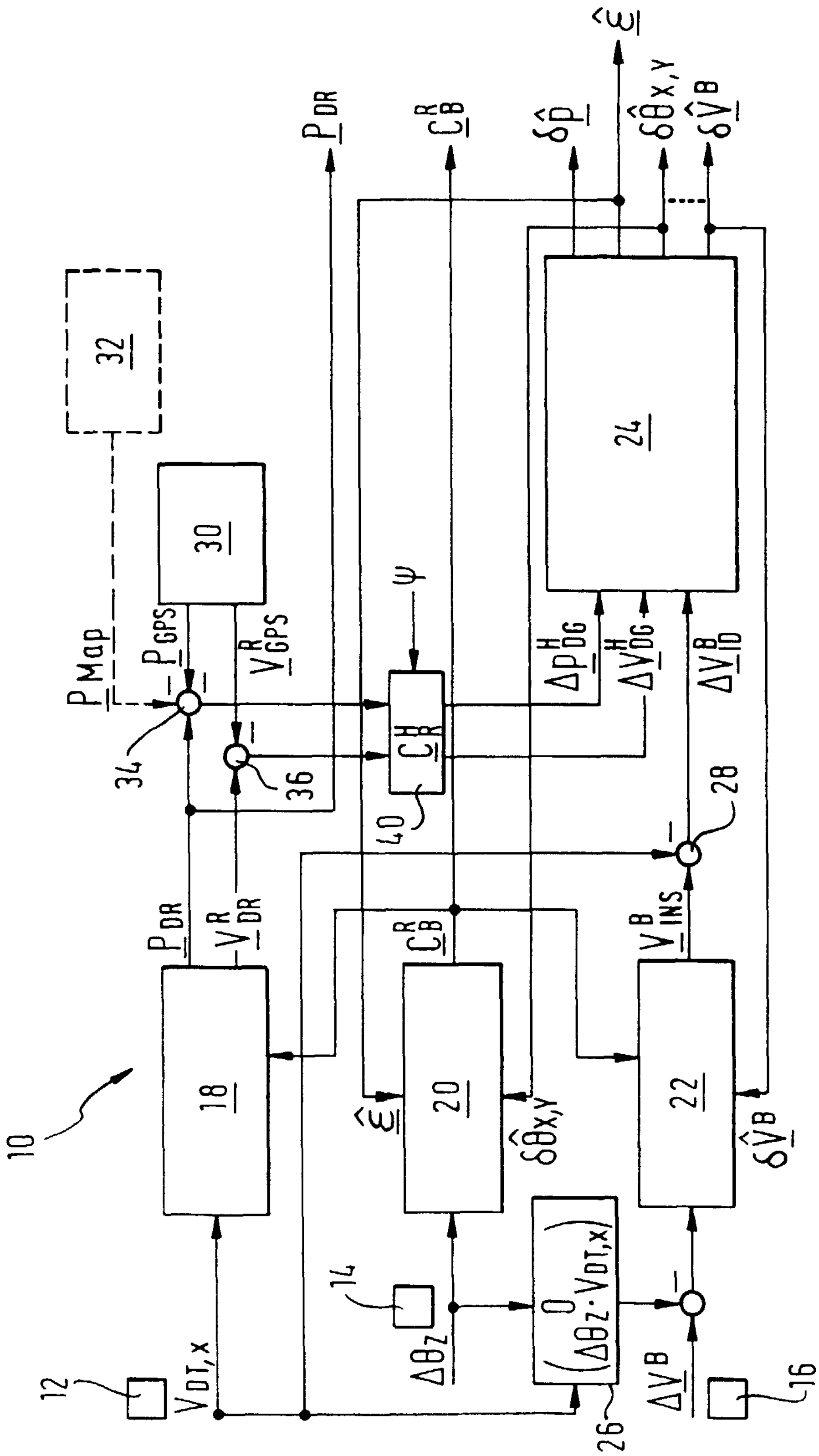
10
12
14
16
18
20
22
24
26
28
30
32
34
36
40
$V_{DT,x}$
$\Delta\theta_z$
$\Delta V^B$
$P_{DR}$
$V^R_{DR}$
$C^R_B$
$V^B_{INS}$
$P_{Map}$
$P_{GPS}$
$V^R_{GPS}$
$\psi$
$C^H_R$
$\Delta p^H_{DG}$
$\Delta V^H_{DG}$
$\Delta V^B_{ID}$
$\hat{\varepsilon}$
$\delta\hat{\theta}_{X,Y}$
$\delta\hat{V}^B$
$\delta\hat{p}$
$\begin{pmatrix} 0 \\ \Delta\theta_z \cdot V_{DT,x} \end{pmatrix}$

Fig. 4

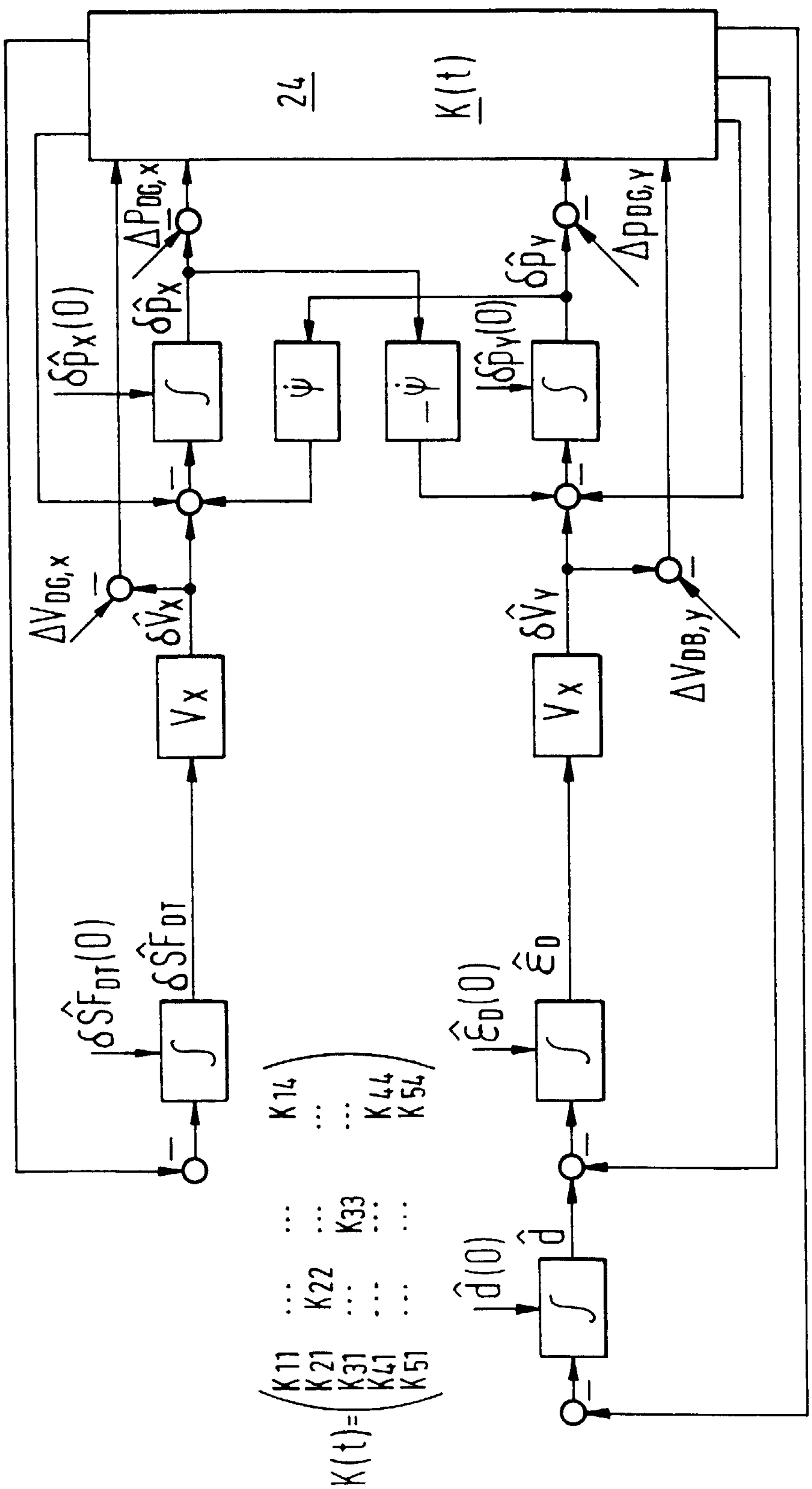
24
K(t)
Vx
Vx
ψ̇
−ψ̇
$\Delta P_{DG,x}$
$\Delta p_{DG,y}$
$\Delta V_{DG,x}$
$\Delta V_{DB,y}$
$\delta\hat{p}_x$
$\delta\hat{p}_x(0)$
$\delta\hat{p}_y$
$\delta\hat{p}_y(0)$
$\delta\hat{V}_x$
$\delta\hat{V}_y$
$\delta\hat{SF}_{DT}$
$\delta\hat{SF}_{DT}(0)$
$\hat{\varepsilon}_D$
$\hat{\varepsilon}_D(0)$
$\hat{d}$
$\hat{d}(0)$
K(t)=
K11 ... ... ... K14
K21 K22 ... ... ...
K31 ... K33 ... ...
K41 ... ... ... K44
K51 ... ... ... K54

Fig. 5

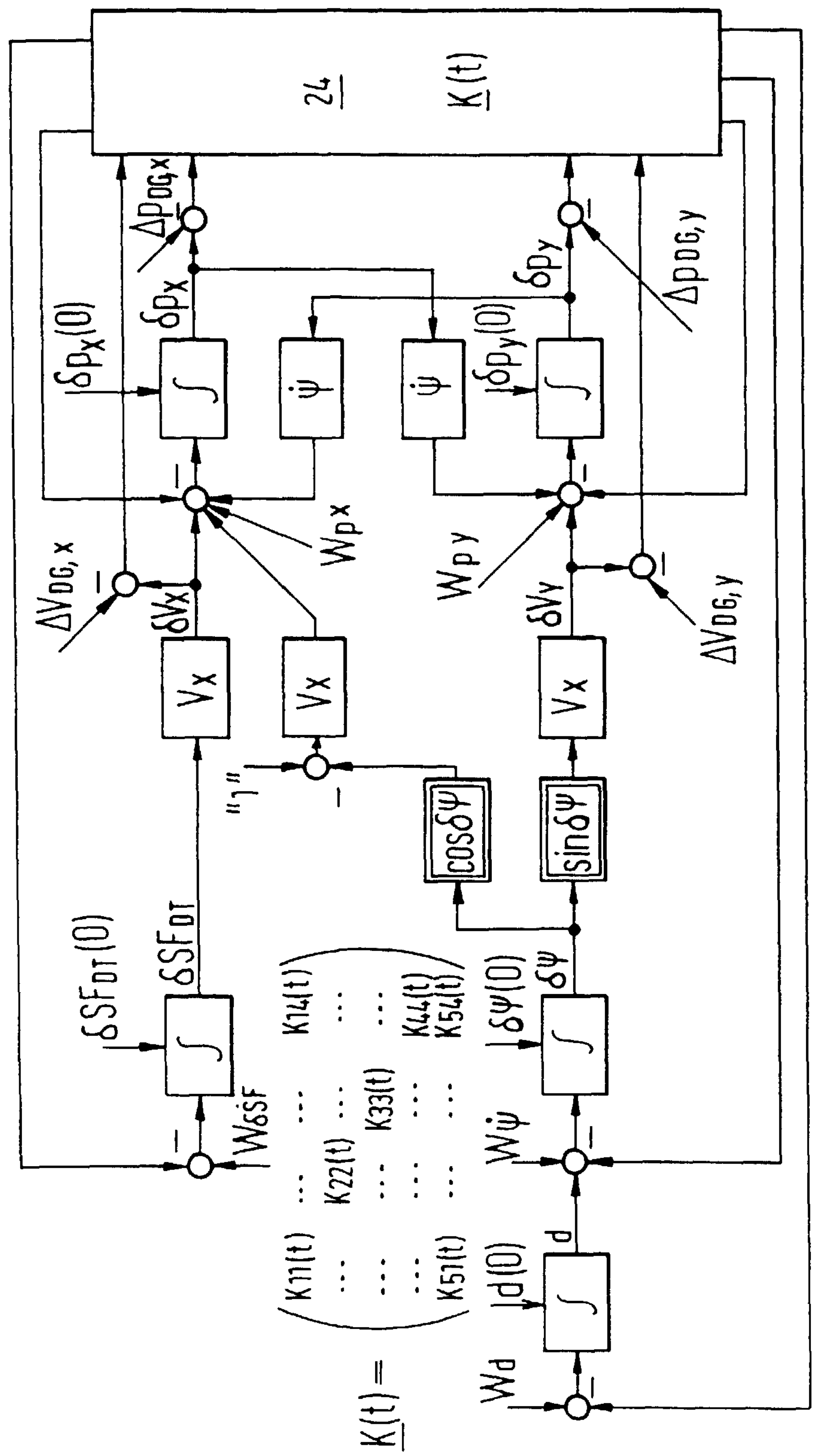
24
K(t)
δpx(0)
δpx
Δp DG,x
δpy(0)
δpy
Δp DG,y
ΔV DG,x
δVx
Wpx
Wpy
δVy
ΔV DG,y
Vx
Vx
Vx
ψ̇
ψ̇
"1"
cosδΨ
sinδΨ
δSF DT(0)
δSF DT
W δSF
δΨ(0)
δΨ
WΨ
d(0)
d
Wd
K(t) =
K11(t) ... K22(t) ... K33(t) ... K14(t) ... K44(t) K51(t) ... K54(t)

Fig. 6

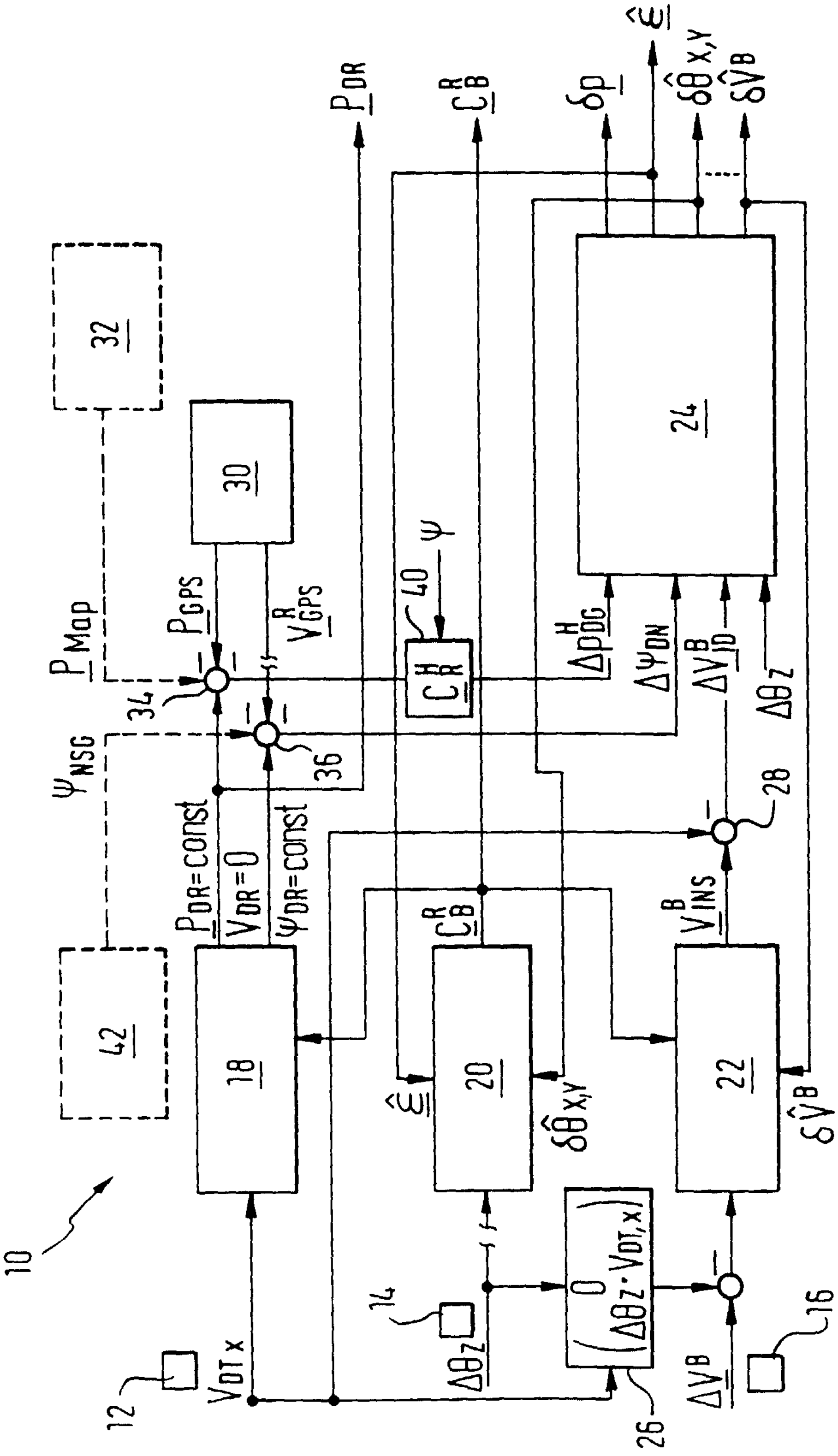

Fig. 7

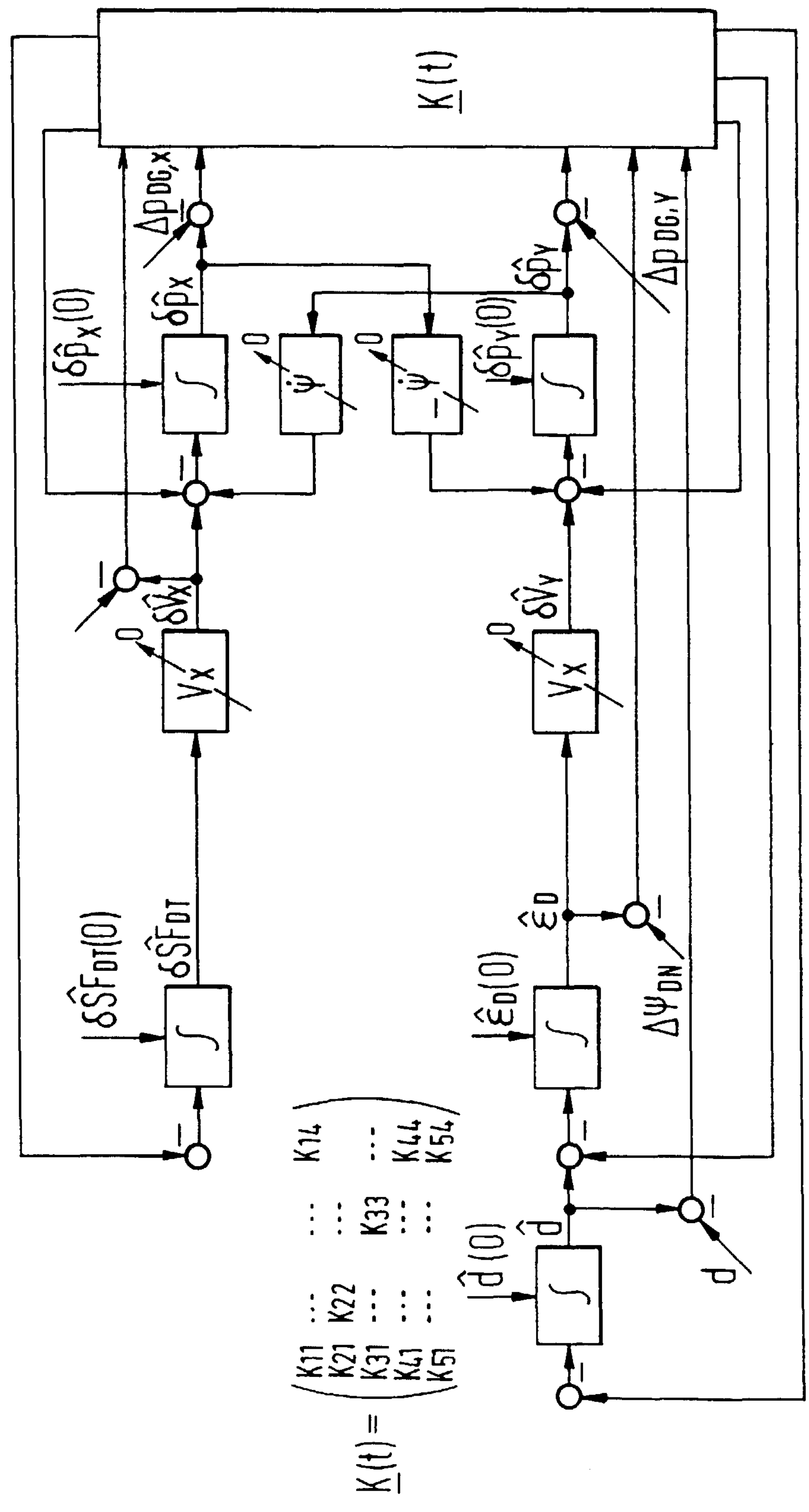

K(t)
δŜF_DT(0)
δŜF_DT
V_x
δV̂_x
δp̂_x(0)
δp̂_x
Δp_DG,x
ψ̇
−ψ̇
δp̂_Y(0)
δp̂_Y
Δp_DG,Y
δV̂_Y
ε̂_D(0)
ε̂_D
ΔΨ_DN
d̂(0)
d̂
d
0
K(t) = (K11 ... ... ... K14; K21 K22 ... ... ...; K31 ... K33 ... ...; K41 ... ... ... K44; K51 ... ... ... K54)